Europäisches Patentamt

**European Patent Office**

Office européen des brevets

(19)

(11) Publication number: **0 188 882**
A1

## (12) EUROPEAN PATENT APPLICATION

(21) Application number: **85309005.8**

(22) Date of filing: **11.12.85**

(51) Int. Cl.⁴: **C 12 C 9/00,** C 12 C 1/18,
C 12 C 9/04

(30) Priority: **12.12.84 GB 8431290**

(43) Date of publication of application: **30.07.86
Bulletin 86/31**

(84) Designated Contracting States: **AT BE CH DE FR GB IT
LI LU NL SE**

(71) Applicant: **WHITBREAD & CO. LTD., Brewery Chiswell
Street, London EC1Y 4SD (GB)**

(72) Inventor: **Maule, David Roger, 45 Kimbolton Road,
Bedford MK40 2PG (GB)**

(74) Representative: **Rackham, Stephen Nell et al, GILL
JENNINGS & EVERY 53-64 Chancery Lane, London
WC2A 1HN (GB)**

(54) **Coagulable material removal from extracts of malted barley.**

(57) A method of removing coagulable material that coagulates during and after boiling from an aqueous solution of matter extracted from a malted barley comprises passing the aqueous solution of matter extracted from malted barley through a bed containing a silica hydrogel or xerogel which adsorbs coagulable material from the aqueous solution before a subsequent fermentation or boiling treatment. It is particularly effective if silica hydrogel or xerogel is mixed with the solution before it is passed through the bed containing the silica hydrogel or xerogel. The method is so effective in removing coagulable material that it is possible to replace the conventional wort boiling with this removal of the coagulable material and an evaporation step in which the wort is brought into forced contact with air or other gas.

Whitbread & Co PLC                    80/2312/02

## Coagulable Material Removal From Extracts Of Malted Barley

The initial stage in the manufacture of a malt extract, and in the brewing of beer from malted barley, is the crushing of the malted barley followed by a mashing step in which it is mixed with hot water so that enzymes in the malted barley act on starch in the malt to convert it into soluble sugars which dissolve in the water. The solution of the soluble sugars and other soluble compounds is separated from the spent malt by filtration with the spent malt itself forming a porous bed through which the solution is filtered. The solution of sugars and other soluble compounds is known as a sweet wort in brewing.

In the manufacture of a malt extract this solution is then boiled under a reduced pressure to evaporate the majority of the water and to leave, as a residue, malt extract.

In brewing, the sweet wort is boiled with hops or preparations derived from hops such as hop powders and extracts to produce a hopped wort. The hopped wort is cooled and then fermented to produce beer.

In both of these processes, the solution of sugars and other soluble compounds contains material such as proteins and polyphenols which coagulate on boiling to form a precipitate known as trub. In the manufacture of a malt extract this trub forms a part of the residue and so part of the resulting extract. In the brewing of beer the trub is easily removed from the hopped wort before cooling and fermentation. However, in both manufacturing processes the heating surfaces of the vessels in which the solution is boiled rapidly become coated with trub which reduces their heating efficiency and leads to the need for frequent cleaning of the heating surfaces.

In brewing, during boiling of the sweet wort with the hop material the $\alpha$-acids of the hops are isomerised to more soluble compounds which provide bitterness in the final beer. A part of the isomerised $\alpha$-acids is adsorbed onto the trub which coagulates during boiling and onto other precipitates which form later in the brewing process. The trub and later precipitates, together with the adsorbed $\alpha$-acids, are discarded. To compensate for this loss of $\alpha$-acid, more hops (or hop extract) have to be used than would be required if there was no such loss.

Solids such as the trub and residues from hop powders are often removed from the hopped wort after boiling by passage through a whirlpool tank in which the hopped wort is passed tangentially into the tank so setting up a whirlpool. The solid material is deposited in a cone on the floor of the tank and the clarified wort is run out from an outlet at the edge of the tank. Since some of the hopped wort remains with the cone of solid material deposited in the whirlpool tank, the greater the amount of trub formed on boiling the greater the amount of hopped wort lost by entrainment upon separation of the trub.

If there is a large amount of trub present it is quite common for the whirlpool tank not to effect a complete separation with the result that some trub is carried through to fermentation and it is believed that this can give rise to sulphury flavours in the finished beer. Various attempts have been made to remove as much trub as possible before fermentation, for example, using centrifugation, filtration or air flotation methods. One example of such a filtration is described in BE-A-565628. In this example, instead of boiling hops in the wort for 1 to 2 hours, the hops are boiled in water or a part of the wort which has been acidified to increase the isomerisation of the hops. This hop extract is then introduced into the remainder of the wort. To prevent loss of the hop extract the wort is treated by filtration through Kieselguhr to remove the trub before hopping.

Further precipitation occurs on cooling of the wort. This is known as a cold break. Presence of trub and/or cold break during fermentation can result in subsequent formation of undesirable flavours and a loss of beer by entrainment when the solids are removed subsequently. Furthermore, the trub and cold break tend to sediment together with the yeast thus reducing the quality of the yeast for further use.

Materials such as proteins and polyphenols present in the hopped wort and which survive into the final beer can precipitate and cause hazes to develop. It is therefore desirable to remove them. One method is to treat the fermented beer with bentonite and/or a proteolytic enzyme. US-A-2433411 describes one such treatment in which the bentonite is added at any stage in the brewing process and enzyme is added separately and after the wort boiling step. More usually filtering aids such as bentonite are added to the fermented beer to remove the proteins, polyphenols and other haze precursors. Other materials that have been added to fermented beer include Fullers earth, Kieselguhr, kaolin, silica gel and active carbon. All these are disclosed in US-A-2291624.

According to this invention a method of removing coagulable material that coagulates during and after boiling from an aqueous solution of matter extracted from a malted barley comprises passing the aqueous solution of matter extracted from malted barley through a bed containing a silica xerogel or hydrogel which adsorbs coagulable material from the aqueous solution before a subsequent fermentation or boiling treatment.

Preferably the solution is passed through a column packed with, or filter coated, with silica hydrogel or xerogel. The passage of the solution through the bed brings the solution into intimate contact with the silica hydrogel or xerogel and also separates the adsorbed materials from the solution. A significant increase in the removal of coagulable materials is obtained by the intimate contact that is established between the solution and the bed containing a silica hydrogel or xerogel. Around a 30% increase in the amount of coagulable material removed is obtained when the solution is passed through a bed containing the silica hydrogel or xerogel as compared to the removal obtained by the mere admixture of silica hydrogel or xerogel to the solution and its subsequent removal by, for example, using a centrifuge.

Particularly effective removal of the coagulable materials occurs when some silica hydrogel or xerogel is added to the solution and then the mixture is filtered through a filter precoated with a further quantity of silica hydrogel or xerogel.

The silica hydrogel or xerogel preferably has a pore diameter in a range from 3 to 12 nm (30 to 120 Å) and preferably has a surface area in a range from 200 to 1200 $m^2/g$. Whilst the amount of silica hydrogel or xerogel contacted with the solution may be in a range from 0.55 to 8.30 $kg/m^3$, it is preferred that the least quantity needed to obtain a satisfactory result is added and, typically this is in a range from 1 to 2 $kg/m^3$. A silica hydrogel sold under the Trade Name of Lucilite is especially preferred.

When the present invention is used on a solution from which a malt extract is to be prepared or when it is used on a wort which will subsequently be boiled with hops or a hop extract to produce a hopped wort, the passage of the solution through the bed containing the silica hydrogel or xerogel occurs immediately before the solution or wort is boiled. In a brewing process there is a considerable reduction of up to 98% in the formation of trub upon boiling the wort which leads to an economy in energy usage, since the heating surfaces are not so heavily fouled, and a reduction in the frequency of cleaning of the heating surfaces. Again in this case, the loss of α-acids by adsorption on to the trub is minimised and an economy can be made in the amount of hops or hop extract used to achieve a particular bitterness level in the final beer.

Since the amount of trub to be separated from the boiled wort is substantially reduced there is a corresponding reduction in the loss of wort by entrainment. In the case of a whirlpool tank a saving of about 1% of the wort is achieved and a substantial saving in the effluent load leaving the whirlpool tank is also achieved. The filtration of the wort does not involve any substantial loss of wort because any entrained wort can be easily displaced from the filter using water. Also, since the material removed from the wort is adsorbed onto the silica hydrogel or xerogel the residue from the filtration step is in the form of a solid filter cake, which can be disposed of as a solid and so does not add to the effluent load of the process.

Moreover in the production of a malt extract it is possible to reduce substantially the amount of trub formed on boiling the solution to evaporate the water so that malt extract can be obtained which is substantially free of trub and is thus of an improved quality.

The present invention removes such a large proportion of the coagulable material present in a wort that it is now possible to produce beer without boiling the wort. In this case the passage of the solution through the bed containing the silica hydrogel or xerogel occurs at the end of the mashing step. The filtered wort is then brought into a forced contact with air or other gas to evaporate a minimum of 3% by weight of the wort and so remove the unwanted volatile components of the wort. The forced contact with air, or other gas, preferably takes place by allowing the wort to flow as a thin film or as a spray against a counter-current of air or other gas but it is also possible to bubble the air or other gas through the wort. The energy required for evaporation is derived from the heat content of the wort itself, thus the forced contact between the wort and the air or other gas leads to an evaporation which results in a drop in temperature of the wort, of typically of between 20°C and 30°C. This, in turn, provides a considerable saving in cooling medium and plant required to cool the wort before it is fermented.

Such a process preferably includes a stabilisation step in which the wort is held at a high temperature for a period of time before the contact with the air or other gas. This stabilisation step may take place before the passage of the wort through the bed of silica hydrogel or xerogel. Preferably the wort is held at a temperature in a range from 90°C to 95°C for substantially ten minutes. This stabilising step is primarily provided to destroy enzymes and microorganisms. in addition, having the wort at a high temperature at the start of the forced contact with air or other gas makes the evaporation more rapid and keeps the wort at a reasonably high temperature through its evaporation which is unfavourable to microbial contaminants. During the forced contact with air or other gas it is preferred that steps are taken to ensure that the air, or other gas, is free from microbial contaminants. Typically an evaporation of 6% is carried out. The energy needed to be supplied to achieve this evaporation by forced contact with air or other gas is substantially less than that if the evaporation is achieved by boiling. The wort, after treatment in this way may be passed directly through an in-line chiller, which adjusts the temperature of the wort to that required for the start of fermentation and then to a fermenting vessel.

Since the selectively adsorbing agent removes much of the coagulable material such as proteins and polyphenols that contribute to beer hazes, not only is formation of trub and cold break reduced, but haze formation in the fermented beer is also inhibited with the result that the stability of the beer is increased. Also, since trub is not carried through to the fermentation process and the cold break is reduced, production of undesirable flavours during the fermentation as a result of the precipitated trub or cold break being present in the fermentation is substantially avoided. At the end of a conventional fermentation trub and cold break sediment with the yeast which is then harvested for re-use or for other purposes. Reduction in the amounts of cold break and trub when using the present invention thus improves the quality of the yeast harvested and reduces loss of beer by entrainment.

Examples of methods in accordance with this invention will now be described and contrasted with conventional techniques with reference to the accompanying drawings; in which:-

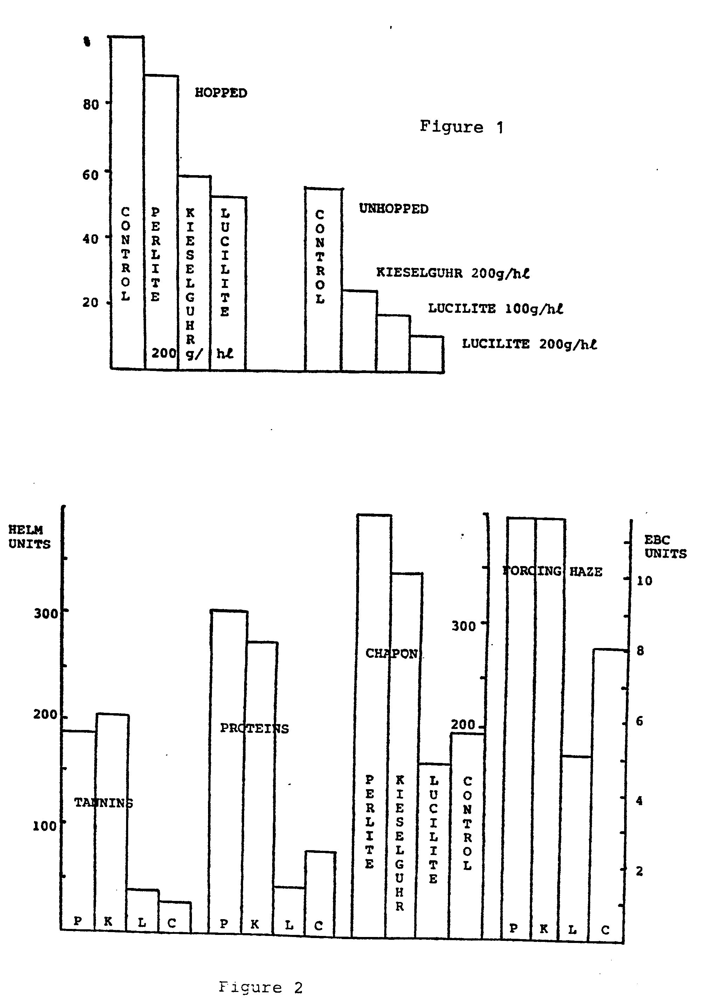

Figures 1, 2 and 3 are bar charts showing pictorially the average results of pilot scale trials.

Example 1

In pilot scale trials of the method in accordance with this invention a wort of specific gravity 1.048 was prepared from a lager malt using conventional brewing techniques involving the use of a Strainmaster (registered trade mark) for the separation of the sweet wort from the spent malt grains. The resulting wort was boiled normally with 0.25 g/litre of a hop extract which contain 30% of α-acids for one hour and this was then clarified in a whirlpool tank. The residual trub in the whirlpool tank was collected and allowed to settle in a graduated container for 24 hours. The resulting hopped wort was tested by three separate chemical tests which measured respectively the content of tannins which are susceptible to oxidation by peroxidase, the content of protein which is susceptible to precipitation by tannic acid, and the content of material coagulable by adding 5% by volume of absolute alcohol and by chilling to a low temperature of -5°C for one hour.

In experiment A the wort was filtered through a horizontal screen filter which had been pre-coated with Lucilite (registered trade mark), a silica hydrogel, to a depth of 2 cm. The amount of Lucilite (registered trade mark) used in comparison with the amount of wort treated was high, 5 kg/cubic metre as a result of the configuration of the filter being large in comparison with the amount of wort being treated.

In experiment B the wort was filtered through a horizontal screen filter which had been pre-coated with Perlite and Kieselguhr, conventional filter aids. In experiment C the wort was not filtered at all. The volume of trub which settled out of the boiled hopped wort within 24 hours is shown in Table I as are the quantities of oxidisable tannins, of precipitable proteins and of haze present in the derived beers.

### TABLE I

|                                              | Experiment | | |
|----------------------------------------------|------|------|------|
|                                              | A    | B    | C    |
| Volume of settled trub (litres)              | 2    | 13   | 17   |
| Oxidisable tannins (HELM units)              | 52   | 183  | 97   |
| Precipitable proteins (HELM units)           | 56   | 340  | 285  |
| Haze after adding alcohol and cooling (HELM units) | 195 | >500 | >500 |

The results of the comparative experiments discussed in Example 1 show that the treatment of the wort with Lucilite results in a considerable reduction in the formation of trub on subsequent boiling of the sweet wort and also demonstrate a considerable improvement in the stability of the resulting beer.

Example 2

In this example a wort was prepared as in Example 1 and again the treated wort was boiled for one hour with the addition of 0.25 g/litre of hop extract. In experiment D the wort was filtered through Lucilite before boiling in a similar fashion to experiment A. In experiment E no treatment of the wort was carried out, as in the case of experiment C. In addition to the tests carried out in example 1 a further test was performed in that the resulting beer was forced by being allowed to stand at a temperature of 60°C for four days and then chilled to 0°C. The haze was then measured. The results of these tests are shown in Table II.

## TABLE II

|  | Experiment | |
|---|---|---|
|  | D | E |
| Volume of settled trub (litres) | 3 | 24 |
| Oxidisable Tannins (HELM Units) | 134 | 412 |
| Precipitable proteins (HELM Units) | 28 | 196 |
| Haze after adding alcohol and cooling (HELM Units) | 97 | >500 |
| Haze after four days forcing at 60°C and chilling to 0°C (EBC Units*) | 5.5 | >12 |

*(European Brewing Convention Units)

The results of this test show a large reduction in trub formation and again show a marked stabilisation of the derived beer as a result of the treatment of the wort with Lucilite.

Example 3

A batch of standard commercial unboiled lager wort was subjected to a variety of treatments and then the worts after these treatments were each divided into two parts one of which was boiled for an hour with the addition of 0.25 g/l hop extract having an α-acid content of 30% and the other half of which was simply boiled for an hour without the addition of any hop extract. All samples were then allowed to settle and the wort decanted. The residual trub was collected in sintered glass crucibles and washed with a small quantity of water. The collected trub was then dried to a constant weight and the weights of trub collected in each experiment are shown in Table III.

## TABLE III

| Treatment of unboiled wort | | Amount of trub collected (gr/litre of wort dry weight basis) | |
| --- | --- | --- | --- |
| | | Boiled Alone | Boiled with hop extract |
| F NIL | | Fa 0.58 | Fh 0.99 |
| Passed through a 75 micro- metre sieve | | 0.52 | 0.94 |
| Passed through a 74 micro- metre sieve pre-coated with Lucilite at the following rates related to the amount of wort filtered | | | |
| G | 1.0kg/m³ | Ga 0.02 | Gh 0.36 |
| H | 2.0kg/m³ | Ha 0.01 | Hh 0.29 |
| I | 4.0kg/m³ | Ia 0.01 | Ih 0.28 |
| J | 8.0kg/m³ | Ja 0.00 | Jh 0.28 |
| Passed through a 74 micro- metre sieve pre-coated with Kieselguhr and Perlite | | | |
| K | 1.0kg/m³ | Ka 0.17 | Kh 0.53 |
| L | 8.0kg/m³ | La 0.12 | Lh 0.51 |

The results in Table III make it clear that the worts Fa to La which were boiled alone without the addition of a hop material did provide a substantial reduction in trub formation when they were simply passed through a conventional sieve such as a conventional 75 micrometre sieve alone or coated with Kieselguhr and Perlite. An even greater reduction was achieved when the unhopped wort was also contacted with Lucilite. The worts which were boiled with the hop extract, samples Fh to Lh, formed more trub on boiling, which is clearly the result of the addition of the hop material. Again the results show that the initial filtration of wort through Lucilite afforded a greater reduction in subsequent trub formation than was achieved by filtration through conventional filter aids.

Example 4

In a further laboratory scale trial a sweet wort having an original gravity of 1040 was prepared in a pilot plant. This sweet wort was treated by passage through a conventional filter in experiment N and by passage through a filter coated with various quantities of Lucilite in experiments O, P and Q. The resulting wort was then boiled with the addition of 0.25 g/litre of hop extract and the trub formed during the boiling was removed and weighed. The wort was then rapidly cooled and the cold break that formed after cooling was separated from the wort, dried and weighed. The results of this experiment are shown in Table IV.

TABLE IV

|   |   | Weight of trub on boiling | Weight of cold break |
|---|---|---|---|
| N | Screened only | 1.39 g/litre | 0.089 g/litre |
| Filtered through Lucilite |   |   |   |
| O | 2.0 kg/m³ | 0.49 | 0.053 |
| P | 4.0 kg/m³ | 0.50 | 0.050 |
| Q | 8.0 kg/m³ | 0.42 | 0.046 |

This example shows that contaction with Lucilite causes a considerable reduction in the weight of trub formed on boiling of the wort and also shows a reduction in the quantity of cold break formed compared to the arrangement not using Lucilite.

Example 5

In a further laboratory experiment, the effect of adding Lucilite to a mash was investigated. A small scale mash was conducted using 500 ml of water and 187 g of ground malt. In experiment R 2g of Lucilite was added to the mash. In experiment S no Lucilite was added. The mash was held at a temperature of 50°C for 45 mins and at a temperature of 65°C for 30 mins. Finally, the temperature was raised to 75°C and the mash was filtered through a Buchner funnel sparging the spent grains using a total of a further 500 ml of water in each case. Wort was collected at a final gravity of 1.040 and after boiling the trub produced was collected, dried and weighed. The results of this example are shown in Table V.

TABLE V

Dry weight of trub collected

| | |
|---|---|
| R | 1.01 g/litre |
| S | 1.60 g/litre |

This example again shows that there is a substantial reduction in the amount of trub precipitated upon boiling of the wort as a result of the preliminary addition of Lucilite.

After these laboratory scale experiments further investigations were conducted on a pilot scale 15 hectolitre capacity brewery equipped with a 5 sq metre vertical leaf filter. In the further investigations the minimum quantities of silica hydrogel to be effective were used. Wort was separated by means of a Strainmaster (Registered Trade Mark) and then, while still hot, the wort was filtered prior to boiling. Alternative filter aids - Kieselguhr, perlite and the silica hydrogel sold under the Trade Name of Lucilite - were used and trials were conducted with and without hop material present during subsequent boiling. The averaged results of a number of trials, usually six, are shown in Figures 1 to 3.

The results show that filtration through the silica hydrogel Lucilite (Registered Trade Mark) halved the amount of trub precipitated during boiling. There was a similar reduction in the amount of cold trub formed on cooling the wort. Alternative filter aids had a lesser effect. Of great significance is that when the trial was repeated but without using any hop material during boiling, prior filtration through the hydrogel reduced trub formation to only 10% of the amount obtained when boiling unfiltered wort with hop extract.

To determine the quality of the beers derived from the experimental worts investigations were carried out into the level of haze stabilisation that had been achieved by filtration through silica hydrogel at such an early stage and to ascertain whether removal of protein in this way had affected the foam and head properties of the beer.

Figure 2 compares results for four stability-related analyses of the experimental beers. The reference beer was stabilised by treatment with Lucilite at a rate of 45g per hectolitre after fermentation but the experimental beers received no treatment after fermentation. The results show that filtration through Lucilite of unhopped wort prior to boiling gave beers which, when judged by each of the four analyses, were just as or more stable than the reference beer. Filtration through perlite or Kieselguhr had no stabilising effect.

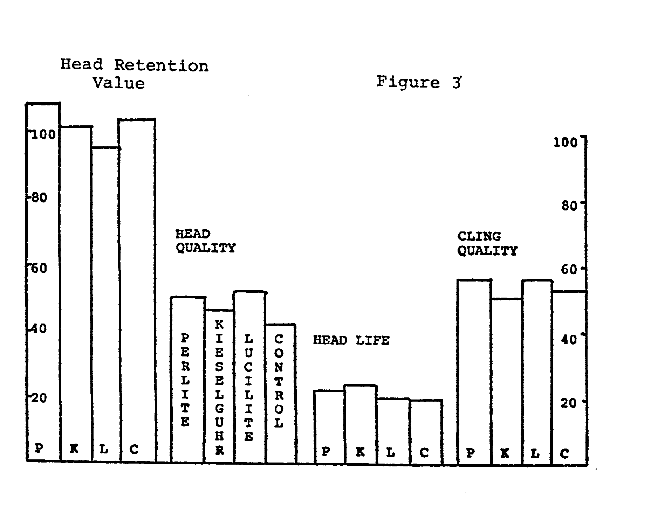

Turning to foam properties (Figure 3) the head retention value of the beer derived from the wort which had been filtered through the silica hydrogel was adversely affected but only to a very small and acceptable degree. In three tests based on visual observation of poured beers which more accurately reflect head performance, no adverse effect was noted. These tests entail visual examination at intervals of beer poured into glasses of two sizes, the glasses being progressively emptied during the period of observation. Head and cling quality are estimated as percentages of the ideal and head life is the time taken for a 1 cm² clear area to appear in the beer surface.

The advantages of commercial adoption of the process of filtering wort through silica hydrogel prior to boiling stem from reduced precipitation of trub during boiling and later. We have shown that the greatest reduction would be obtained by omitting hop material during boiling though possibly use in the copper of very pure hop extracts such as those obtained with liquid carbon dioxide as extractant would be as effective.

So far all of the examples have used a silica hydrogel, however silica xerogel is as effective in removing coagulable material as will be seen in the following example.

Example 6

Four different silica xerogels were used in laboratory trials, conducted in a similar way to Example 3. The amount of silica xerogel was 2g per litre and, after filtration through the silica xerogel, the wort was boiled with 0.25g per litre of hop extract. The silica xerogels used covered a range of pore volumes and particle size. The results are given in Table VI, and show that xerogel 4 removed only 1/3 of the coagulable material and was a poor filter aid - a substantial amount of suspended solids surviving in the wort after filtration. Xerogel 3 also was a poor filter aid. The lower pore volume xerogels 1 and 2 combined good removal of coagulable material with good filtration properties. However the head retention values of the derived beers were unacceptably low.

## TABLE VI

| Xerogel used Ref No. | | 1 | 2 | 3 | 4 |
|---|---|---|---|---|---|
| | Average Particle Size | 15 nm | 15 nm | 35 nm | 35 nm |
| | Pore Volume | Low | Inter-mediate | High | Very High |
| % Reduction Compared with Control Experiment | Trub | 60 | 51 | 50 | 35 |
| | Cold Break | 68 | 49 | 40 | 30 |
| Filtrate Suspended Solids mg/1 | | 25 | 18 | 120 | 150 |
| Head Retention Value Of Beer | | 86 | 89 | 90 | 97 |

Xerogel 1 was used in a subsequent pilot scale trial conducted in the same way as Examples 1 and 2. The results are shown in Table VII and again show that filtration of the wort through xerogel 1 resulted in more than a 50% reduction in yield of trub and a substantial haze stabilisation of the derived beer. However the foam properties of the derived beer were adversely affected.

## TABLE VII

|  | Wort Filtered Through Xerogel Ref. No. 1 | Control (Wort Not Filtered, Beer Not Stabilised) |
|---|---|---|
| Trub Volume (Litres) | 14 | 32 |
| Oxidisable Tannins (HELM units) | 28 | 47 |
| Precipitable Proeins ( " ) | 98 | 372 |
| Haze after adding Alcohol and cooling ( " ) | 219 | 450 |
| Head retention value | 90 | 104 |
| Head Appearance | Good to Fair | Good |
| Cling Appearance | Fair | Good to Fair |
| head Quality | 37 | 40 |
| Head Life | 14 | 18 |
| Cling Quality | 44 | 49 |

These results show that a silica xerogel is effective in removing the coagulable material but can have an adverse effect on head volume when used in the preparation of beer. Accordingly it is preferred that they are only used in the preparation of a malt extract.

## CLAIMS

1. A method of removing coagulable material that coagulates during and after boiling from an aqueous solution of matter extracted from a malted barley comprising passing the aqueous solution of matter extracted from malted barley through a bed containing a silica hydrogel or xerogel which adsorbs coagulable material from the aqueous solution before a subsequent fermentation or boiling treatment.

2. A method according to claim 1, in which the aqueous solution of matter extracted from a malted barley is passed through a bed containing the silica hydrogel or xerogel by passing the solution through a column packed with or a filter coated with the silica hydrogel or xerogel.

3. A method according to claim 2, in which some silica hydrogel or xerogel is mixed with the solution before the solution is passed through the column or filter.

4. A method according to any one of the preceding claims, in which the amount of silica hydrogel or xerogel contacted with the solution is in a range from 1.0 to 2.0 kg/m$^3$.

5. A method according to any of the preceding claims in which the silica hydrogel or xerogel has a pore diameter in a range from 3 to 12 nm (30 to 120 $\overset{o}{A}$) and has a surface area in a range from 200 to 1200 m$^2$/g.

6. A method according to any one of the preceding claims, in which, after the solution is passed through the bed containing silica hydrogel or xerogel it is boiled to evaporate most of the water to provide a malt extract.

7. A method according to any one of claims 1 to 5, in which, after the solution is passed through the bed containing silica hydrogel or xerogel it is boiled with

0188882

hops or a hop extract to provide a hopped wort, the hopped wort subsequently being fermented to produce a beer.

1/2

0188882

Figure 1

Figure 2

0188882

Head Retention Value

Figure 3

**EUROPEAN SEARCH REPORT**

0188882
Application number

EP 85 30 9005

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | US-A-2 291 624 (E. HEIMANN et al.) <br> * Page 2, column 1, line 55 - page 2, column 2, line 49; claims * | 1,2,7 | C 12 C 9/00 <br> C 12 C 1/18 <br> C 12 C 9/04 |
| | --- | | |
| X | US-A-2 316 241 (E. HEIMANN et al.) <br> * Claims; column 2, lines 6-20; example 2; page 1, column 1, lines 32-42 * | 1-4,7 | |
| | --- | | |
| X | MICROBIOLOGY ABSTRACTS, A INDUSTRIAL AND APPLIED MICROBIOLOGY, vol. 2A, no. 6, June 1967, page 118, abstract no. A3286, GB; & CS - A - 118 596 (G. BASAROVA) | 1 | |
| | | | **TECHNICAL FIELDS SEARCHED (Int. Cl.4)** |
| | --- | | |
| P,X | US-A-4 528 198 (R.J. MIZERAK et al.) <br> * Claims; examples 1,3 * | 1,3,6 | C 12 C |
| | --- | | |
| Y | EP-A-0 088 397 (K. RAIBLE) <br> * Claims * | 1,7 | |
| | --- | | |
| Y | THE BREWERS DIGEST, August 1976, pages 44-46,54, GB; R.M. HALCROW: "Silica Hydrogels their properties and uses in chillproofing beer" <br> * Page 45, column 1 * | 1,7 | |
| | ---      -/- | | |

The present search report has been drawn up for all claims

| Place of search | Date of completion of the search | Examiner |
|---|---|---|
| THE HAGUE | 13-05-1986 | COUCKE A.O.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82

## DOCUMENTS CONSIDERED TO BE RELEVANT — Page 2

| Category | Citation of document with indication, where appropriate, of relevant passages | Relevant to claim | CLASSIFICATION OF THE APPLICATION (Int. Cl.4) |
|---|---|---|---|
| A | FR-A-2 021 756  (UNILEVER N.V.) <br> * Claim 1 * | 5 | |
| A | US-A-1 994 494  (L. WALLERSTEIN) | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 13-05-1986 | COUCKE A.O.M. |